# EUROPEAN PATENT APPLICATION

(11) **EP 3 798 500 A1**
(43) Date of publication of application: **31.03.2021**
(21) Application number: 19200498.4
(22) Date of filing: 30.09.2019
(51) Int. Cl.: F21K 9/61, F21S 8/04, F21V 8/00, G02F 1/13357, G02B 6/00

(54) **LIGHT GUIDE PANEL AND LUMINAIRE COMPRISING SAID LIGHT GUIDE PANEL**

(71) Applicant: Thorn Lighting Limited, Spennymoor, Durham DL16 6HL (GB)
(72) Inventor: Maughan, Steve, Spennymoor, Durham DL16 7HL (GB); Pilkington, Gary, Browney, Durham (GB); Stockley, Paul, Heighington, Durham DL56RL (GB); Cook, David, Spennymoor, Durham DL 16 7UR (GB); Bowness, Anton, Shiremoor, Newcastle Upon Tyne (GB)
(74) Representative: Kiwit, Benedikt

(57) **Abstract**

The present invention refers to a light guide panel (2) substantially extending in a plane and having two opposing surfaces (21, 22) being connected by a circumferential side edge (20), wherein at least a section of the side edge (20) is configured to function as a light input area (23) for inputting light into the light guide panel (2), wherein an opening (24) extending between the two surfaces (21, 22) penetrates the light guide panel (2) to connect the two surfaces (21, 22), and wherein an area (X) of the light guide panel (2) opposite to the light input area (23) with respect to the opening (24) comprises a reflective portion (25) configured to reflect light input into the light guide panel (2) via the light input area (23) towards a side (S) of the opening (24) opposite to the light input area (23). The present invention is further directed to a luminaire (1) comprising a light guide panel (2) according to the invention as well as a light source (3) provided to input light into the light guide panel (2) via the light input area (23).

## Description

The present invention refers to a light guide panel substantially extending in a plane and having two opposing surfaces being connected to each other by a circumferential side edge, wherein at least a section of the side edge is configured to function as a light input area for inputting light into the light guide panel. The invention is further directed to a luminaire, preferably a panel light, having such a light guide panel as well as a light source provided to input light into the light guide panel via the light input area.

Light guide panels as well as luminaires provided with such a light guide panel as defined herein above are well known in the prior art. Dependent on the size of the luminaire, the light guide panel is used to input light via one or a plurality of side edges, which inputted light then propagates within the light guide panel thus being available for light output usually at defined areas or sides of the light guide panel, like a front surface thereof. For a homogenous light emission particularly via a front side, it might be sufficient to input light into the light guide panel only via one side of the light guide panel as long as the light preferably distributes over a desired portion of and preferably the entire light guide panel.

It is thus an object of the present invention to provide a light guide panel as well as a luminaire provided with said light guide panel, which allow for more design flexibility of the light guide panel while still allowing preferably homogenous light emission compared with an economic operation of the luminaire.

This object is fulfilled by the subject-matter of the independent claims. The dependent claims study further the central idea of the present invention.

According to a first aspect, the present invention is directed to a light guide panel substantially extending in a plane and having two opposing surfaces being connected to each other by a circumferential side edge. At least a section of the side edge is configured to function as a light input area for inputting light into the light guide panel. An opening extending between the two surfaces penetrates the light guide panel to connect the two surfaces. An area of the light guide panel (i.e. a light guide panel area) opposite to the light input area with respect to the opening comprises a reflective portion configured to reflect light input into the light guide panel via the light input area towards a side of the opening opposite to the light input area.

The light guide panel according to the present invention thus allows for a high flexibility in design as it allows the provision of holes or openings within the light guide panel which penetrate the light guide panel, while still allowing the light being input into the light guide panel even from only one side to propagate through the light guide panel even at positions which would theoretically be unlit if no such reflective portion would be present. This may allow to provide a light guide panel which, for instance, allows for the light input into the light guide panel having openings to distribute over the entire area of the light guide panel and thus to allow for a substantially homogenous light emission, preferably via one of the surfaces like the front surface. The reflective portion thus allows light to reflect/refract back into a - due to the presence of the opening - theoretically unlit area (if the reflective portion would not be present) which thus may give the impression that the entire light guide panel is lit by light sources from two opposite sides.

The reflective portion may be provided by a section of the side edge being opposite to the light input area with respect to the opening. In other words, a section of the side edge being opposite the light input area with respect to the opening comprises at least part of the reflective portion. This allows for sufficient light to propagate through or distribute over the light guide panel preferably from one to the opposite side edges while further allowing part of the light hitting the reflective portion to be reflected towards the opening.

The reflective portion may be provided in a section of the light guide panel area between the side edge and the opening. In other words, a section of the light guide panel area between the side edge and the opening may comprise at least part of the reflective portion. This allows for a defined positioning of the reflective portion even within the outer borders of the light guide panel to thus increase the flexibility of the light reflection and thus the whole light distribution over or propagation through the light guide panel.

The reflective portion may further comprise a second opening, preferably a through-hole, extending between the two sides. In a preferred embodiment, the second opening may be a longitudinal opening, a slit or a groove in the light guide panel.

Provision of such a second opening may allow for an easy provision of the reflective function within the light guide panel, e.g. by simply providing a reflective element into said second opening as further described herein below. Such second opening may also be provided such that it allows for total internal reflection when being arranged in a corresponding angle with respect to the light input area so that no provision of an additional reflective element is required.

The reflective portion may be a reflective profile section, preferably of the side edge and/or in the light guide panel area between the side edge and the opening. Such reflective profile section can be a profile area of the side edge opposite to the light input area and/or the second opening, or the like. By providing such a reflective profiled section, the reflection direction can be easily controlled.

The reflective portion, preferably the reflective profile section, comprises angled sections being angled with respect to the light input area towards the opening. These angled sections can be provided such that light input via the light input area can be reflected by common reflection or even total reflection towards the opening. Therefore, the corresponding angles of the angled section can be defined according to the required needs. For instance, the reflective portion can preferably have a scallop shape, a wave shape, a zig-zag shape, a U-shape, a V-shape, or a W-shape or any other shape having at least one or a plurality of angled sections. In a most preferred embodiment, the reflective portion (preferably in the form of the second opening or the reflective profile section) can be provided or optimized with laser edge technology to thus better ensure a homogenous light distribution in the light guide panel. Such technologies allow for a more accurate profiling of the light guide panel.

The reflective portion may comprise a reflective feature or section, like a reflective coating and/or a reflector element like a reflective strip. The provision of such a reflective feature/section allows for an easy reflection of the corresponding light towards the opening to thus easily distribute the light within the light guide panel even towards the theoretically unlit area behind the opening with respect to the light input area. The reflective coating can be easily applied directly onto the light guide panel (body), e.g. its side edge or within the second opening. The reflector element may be attached to the corresponding light guide panel section, e.g. by gluing, at the side edge or may also be provided in the second opening.

According to another aspect, the present invention is further directed to a luminaire, preferably a panel light, comprising a light guide panel according to the present invention as well as a light source provided to input light into the light guide panel via the light input area. Hence, a luminaire and preferably a flat luminaire like a panel light can be provided with the described light guide panel, which - despite the presence of the opening - allows for a homogenous light distribution even at theoretically unlit areas even when inputting light only via the given light input area; i.e. from only one side of the light guide panel. The luminaire thus obtains all the advantages already described for the light guide panel itself herein above. For further details, it is thus referred to the previous description to avoid repetitions.

The light source can comprise an LED module, which allows for applying a light source with minimal dimensions and high directivity with respect to light output to thus allow for an efficient input of the light of the light source into the light guide panel via the side edge, particularly the light input area. The LED module can comprise at least one or a plurality of LEDs or OLEDs, preferably arrange in a row to provide a longitudinal LED module.

The luminaire, preferably the panel light, may further comprise at least one optical element, like a lens (arrangement), a diffusor (panel), a reflector (panel) and/or a luminaire cover. The optical element or optical elements preferably has/have a plate- or panel-shape and further preferably being stacked with the light guide panel to form an optical panel unit for any desired light emission as requested by the user.

The luminaire, preferably the panel light, may further comprise a housing for carrying the light guide panel and/or the light source, and preferably also carrying the optical element(s). By a corresponding housing, the other components of the luminaire can be better protected, more easily handled, and can also be easily held together.

The optical element and/or the housing may further have a further opening being coaxially arranged with the opening of the light guide panel to form a through-hole, i.e. penetrating the luminaire or panel light. Such a through-hole may further improve the visual appearance desired by a corresponding opening while also allowing this opening to be used in any desired way.

For instance, the luminaire, preferably the panel light, may further comprise a functional component which is preferably detachably mounted, e.g. to the light guide panel, the optical element and/or the housing. The functional component may comprise a functional section which is or can be at least partially inserted in(to) the opening preferably from a rear side towards a front side of the luminaire, and more preferably in way to be substantially flush with the front side of the luminaire or one of the surfaces (e.g. the front surface) of the light guide panel. The functional section may comprise one or a plurality of functional elements of the group consisting of a sensor, like a passive infrared sensor (PIR sensor) and/or a microwave sensor (MWS), a lighting unit, like an emergency light and/or a status indicator lamp, a wireless communication module, like a Bluetooth module and/or a WLAN module and/or a RFID module, and a blank cover. It is thus possible, to equip the luminaire with any desired additional function being provided by the corresponding functional component preferably in an interchangeable manner to thus increase the flexibility of the luminaire.

Further embodiments, features and advantages of the present invention are now described by the Figures of the enclosed drawings.
- Figure 1: shows a perspective rear view of a luminaire, here a panel light, according to a first embodiment of the present invention,
- Figure 2: shows the luminaire according to Figure 1 in an exploited perspective rear view,
- Figure 3: shows a perspective rear view of a luminaire, here a panel light, according to a second embodiment of the present invention,
- Figure 4: shows a perspective rear view of a luminaire, here a panel light, according to a third embodiment of the present invention,
- Figure 5: shows five examples of a luminaire, i.e. here a panel light, according to the present invention in top frontal view; (a) luminaire according to Figure 3 with a blank cover, (b) luminaire according to Figure 3 with a PIR sensor, (c) luminaire according to Figure 3 with MWS, (d) luminaire according to Figure 3 with lighting unit, (e) luminaire according to Figure 4 with PIR sensor,
- Figure 6: a perspective view of a light guide panel according to an embodiment of the present invention,
- Figure 7: a top view of the light guide panel according to Figure 6,
- Figure 8: a top view of the light guide panel according to Figure 6 with examples of light paths propagating through the light guide panel, and
- Figure 9: shows a top rear view of a part of a luminaire, here a panel light, according to a fourth embodiment of the present invention being similar to the one shown in Figure 1.

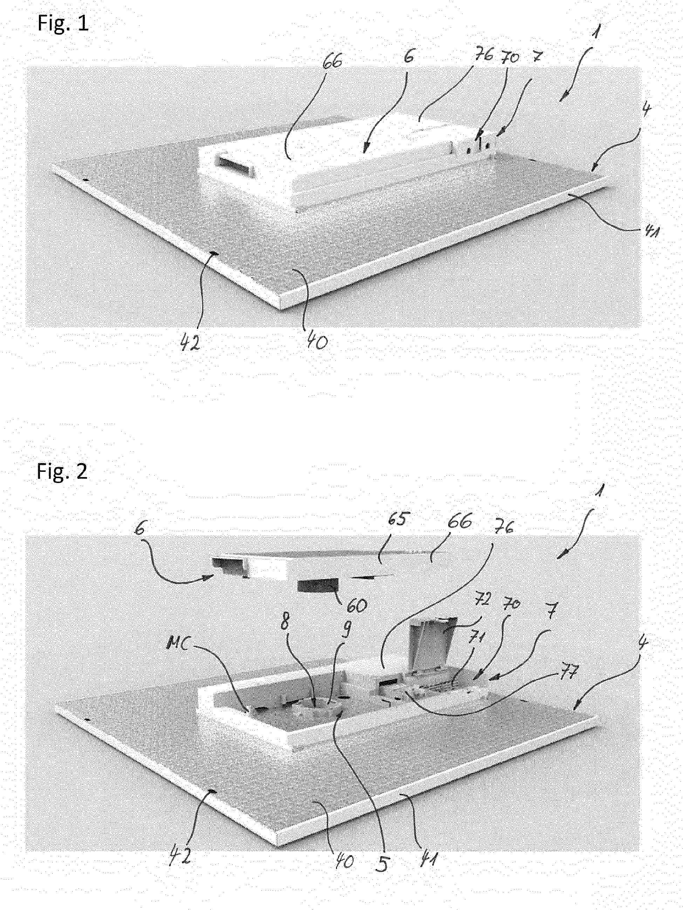

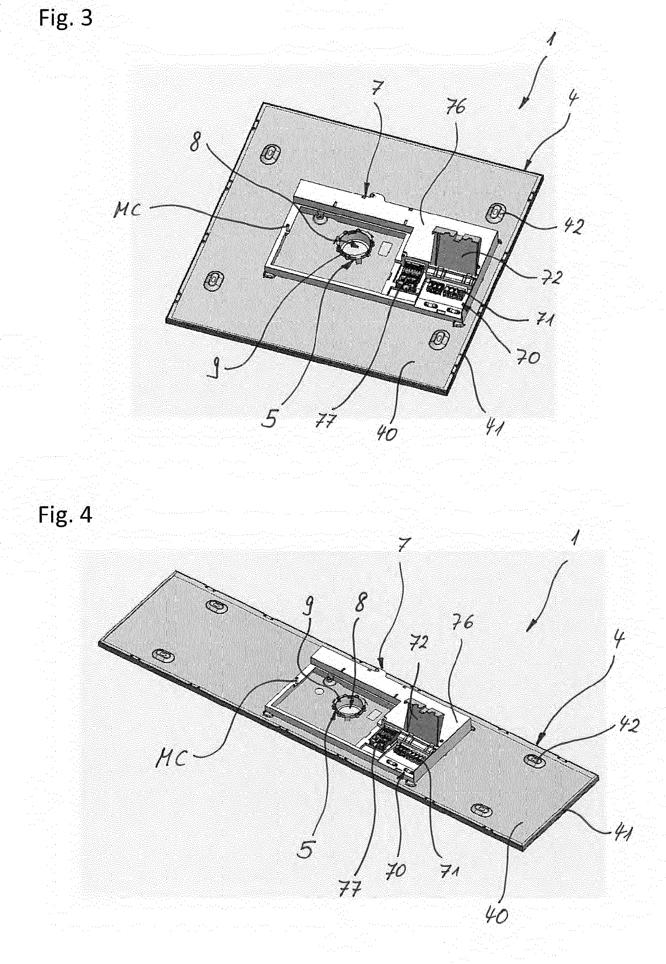

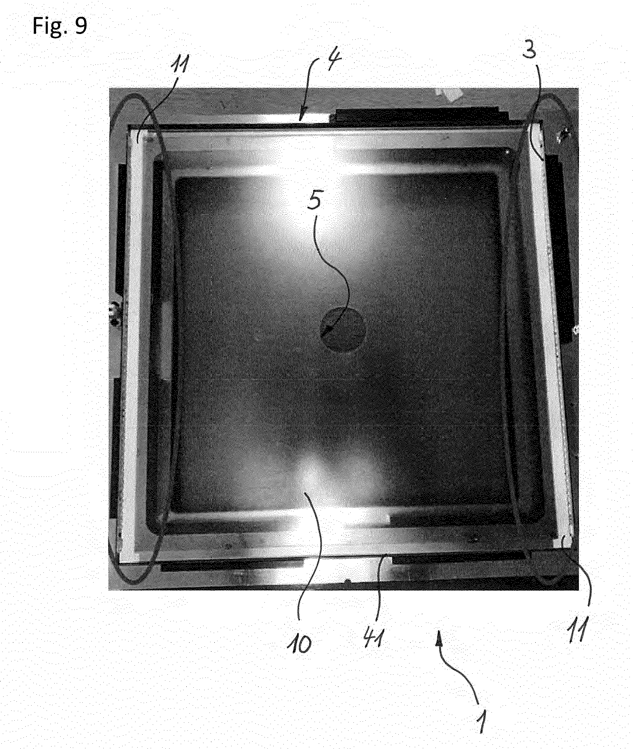

Figures 1 to 5 show different embodiments of a luminaire 1 according to the present invention; Figure 9 shows a part of a luminaire 1 according to the present invention being similar to the one shown in Figure 1. The luminaires 1 as shown and preferred are flat luminaires 1, i.e. the luminaire's 1 dimensions in two directions (width and depth) being orthogonal to each other are many times higher than the luminaire's 1 dimensions in a third direction (height = thickness) being orthogonal to the two other directions. The luminaires 1 thus preferably have a kind of plate-like or panel-like appearance and substantially extend in a plane; i.e. being a panel light 1. While in the following description of the embodiments reference is made to a luminaire 1, this always shall be understood to cover a luminaire 1 in general as well as a panel light as most preferred but not limiting embodiment in particular. The luminaire 1 can have any desired shape and preferably has a rectangular or square shape with four sides. However, the luminaire 1 may also have another polygonal shape or a round shape, a circular or oval shape or any other shape.

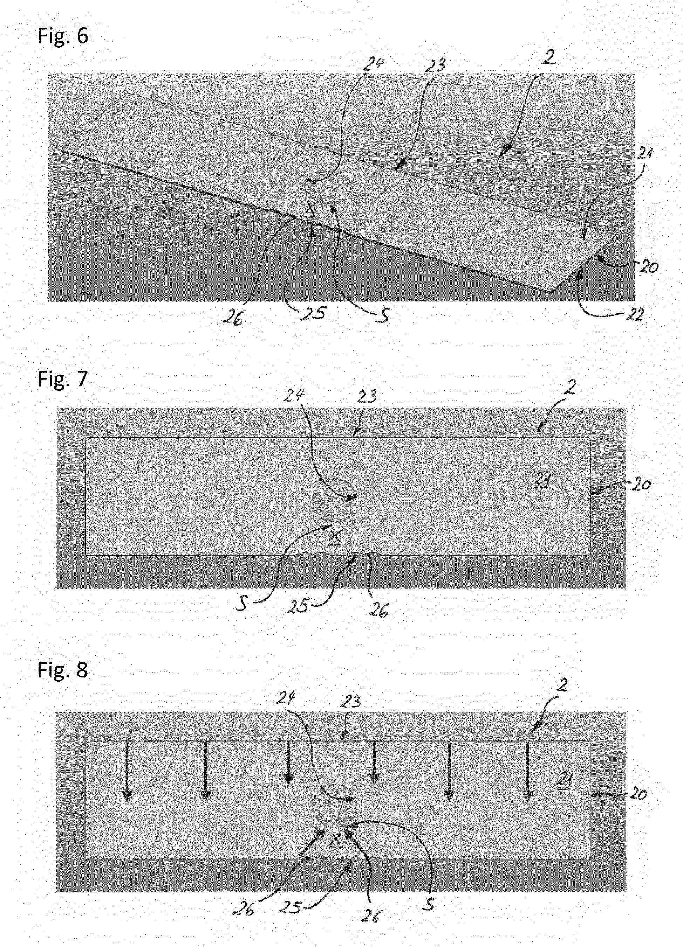

The luminaire 1 comprises a light guide panel 2 which itself forms a separate part of the present invention and will now be described in more detail and with references to Figures 6 to 8.

The light guide panel 2 substantially extends in a plane. The light guide panel 2 has two opposing surfaces 21, 22, namely a front surface 21 and a rear surface 22. The two opposing surfaces 21, 22 here substantially extend in parallel planes so that the light guide panel 2 here has its panel-like shape. The two opposing surfaces 21, 22 are connected to each other by a circumferential side edge 20. At least a section of the side edge 20 is configured to function as a light input area 23 for inputting light into the light guide panel 2. In the shown preferred embodiment, the light guide panel 2 only has one light input area 23 for a simplified layout of the light guide panel 2 and allowing for a most economic operation of the luminaire 1 equipped with said light guide panel 2. Of course, the light guide panel 2 may also have additional light input areas.

Like the luminaire 1, also the light guide panel 2 can have any desired shape and preferably has a polygonal, a rectangular, a square, a round, an oval, a circular, or any other desired shape. The shape of the luminaire 1 and the shape of its light guide panel 2 preferably correspond to each other for obtaining a most compact luminaire 1.

An opening 24 extending between the two surfaces 21, 22 penetrates the light guide panel 2 to connect the two surfaces 21, 22. Hence, the opening 24 forms a through-hole through the light guide panel 2. The opening 24 here is positioned at a central position of the light guide panel 2 in top view, as is exemplarily shown in Figures 7 and 8. The opening 24 may, of course, also be positioned at any other desired area of the light guide panel 2. Also, there may be provided more than one opening 24, which can be distributed over the light guide panel 2 in a symmetrical or asymmetrical manner.

An area X of the light guide panel 2 opposite to the light input area 23 with respect to the opening 24 comprises a reflective portion 25 configured to reflect light input into the light guide panel 2 via the light input area 23 towards a side S of the opening 24 opposite to the light input area 23.

In the shown embodiments of Figures 6 to 8, the reflective portion 25 is provided by a section of the side edge 20 being opposite to the light input area 23 with respect to the opening 24. In other words, the side edge 20 here forms or provides the reflective portion 25.

Additionally or alternatively, the reflective portion 25 may also be provided in a section of the light guide panel area X between the side edge 20 and the opening 24. In this regard, the reflective portion 25 may comprise a second opening, preferably a through-hole, extending between the two sides 21, 22. The opening can be a longitudinal opening, a slit or a groove in the light guide panel 2 (i.e. its body or material).

As shown in Figures 6 to 8, the reflective portion 25 can be a reflective profiled section; here of the side edge 20. In case the reflective portion 25 is provided in a section of the light guide panel area X between the side edge 20 and the opening 24, the reflective profiled section may also be provided in said light guide panel area X.

As also shown in Figures 6 to 8, the reflective portion, preferably the reflective profiled section, can comprise at least one angled section 26 being angled with respect to the light input area 23 towards the opening 24 so that light which hits the corresponding angled section 26 is reflected either by common reflection or even by total reflection towards the theoretically unlit area behind the opening 24 with respect to the light input area 23. By simple provision of angled sections 26, light can be easily distributed over a significant area of the light guide panel 2 even when simply inputting light from only one side or a limited light input area 23, to propagate even at an area X of the light guide panel 2 behind the opening 24 with respect to the light input area 23.

As shown in Figures 6 to 8, the reflective portion 25 preferably has a scallop shape. Of course, any other shapes preferably having reflective profiled sections and/or angled sections 26 are possible, like a wave shape, a zig-zag shape, a U-shape, a V-shape, or a W-shape, or any other such shapes or any combinations thereof.

The reflective portion may comprise a reflective feature or section, like a reflective coating and/or a reflector element like a reflective strip. Such a reflective feature or section can be easily applied to a corresponding light guide panel to thus provide or increase the reflective function of the reflective portion 25.

As mentioned, the luminaire 1 according to the present invention comprises the light guide panel 2 according to the present invention as exemplarily described herein above by the embodiment of Figures 6 to 8. Also with reference to the embodiments of Figures 1 to 5 and 9, the luminaire 1 further comprises a light source 3 (see Figure 9) provided to input light into the light guide panel 2 via the light input area 23. In the shown embodiments, the light source 3 is thus here provided at only one side of the luminaire 1, while the reflective portion 25 still allows for a preferably even distribution of light input via the light input area 23 by the light source 3 preferably over the entire light guide panel 2 to allow for a homogeneous light output, e.g. via the front surface 21, even though the light guide panel 2 comprises the before-mentioned opening 24.

In a most preferred embodiment, the light source 3 comprises an LED module as shown in Figure 9 to thus allow for a most space saving and most economic operation of the luminaire 1. Also, the LED module allows for an accurate and high efficient light input via the light input area 23 into the light guide panel 2.

The luminaire 1 may further comprise at least one optical element, like a lens (arrangement), a diffusor (panel), a reflector (panel) and/or a luminaire cover (10; see Figure 9). The optical element preferably has a plate- or panel-shape like the light guide panel 2. The optical element or optical elements are preferably stacked together with the light guide panel 2 to form an optical panel unit for any desired light emission, as required.

As can be best seen in Figures 1 to 4 and 9, the luminaire 1 may further comprise a housing 4 for carrying the light guide panel 2 and/or the light source 3, and preferably also carrying the optical element(s) 10, if present. The housing 4 here comprises a base portion 40 covering the rear side R of the luminaire 1 and a frame portion 41 here circumferentially surrounding the light guide panel 2 including the light source 3 and, if present, also the other optical elements 10 at their side edges. With reference to Figure 9, the luminaire 1 can thus, for instance, be assembled such that the frame portion 41 is provided into which the light source 3 is positioned at one side thereof. Then, the light guide panel 2 and, if any, further optical elements are placed within said frame portion 41. In Figure 9 there is shown an assembly state in which the light source 3 is placed at the right side of the frame portion 41 to emit light towards an interior region and preferably a central region of the luminaire 1 or frame portion 41 where the light guide panel 2 is to be placed. The luminaire cover 10 is also already placed in the frame portion 41 and here, as shown in Figure 9, aligned/centred by spacers 11 being positioned at opposite sides of the luminaire cover 10. Preferably, the spacers 11 allow alignmend/centering also of the light guide panel 2 when being stacked with the luminaire cover 10 and/or other optical elements, or of the light guide panel 2 alone, e.g., in a case in which no other optical elements are provided. Further, the spacers 11 may also allow alignment of the light source 3 with respect to the light guide panel 2 and, by receiving the light guide panel 2 and/or the optical element(s) 10 between the shown two spacers 11, preferably further keep the light source 3 in contact with the frame portion 41 for efficient heat dissipation. Once the light guide panel 2 is placed and preferably aligned/centred in the frame portion 41, the whole arrangement is then secured by providing the base portion 40 at a rear side.

As shown in figures 1 to 4, the luminaire 1 may further comprise an electronic module 7 to run the light source 3. The electronic module 7 here is provided at a rear side R of the luminaire 1, namely a rear side of the base portion 40.

The optical element and/or the housing 4, preferably the base portion 40, may have a further opening 5 being coaxially arranged with the opening 24 of the light guide panel 2 to form a through-hole 8. In the shown embodiments and as can be best seen in figures 2 to 4, the through-hole 8 or openings 5, 24, may be provided with an insert 9 lining the inner surface of the through-hole 8. The insert 9 can be provided to avoid or direct light emission into the through hole 8 or opening(s) 5, 24, and/or to protect the corresponding luminaire components, like the light guide panel 2, e.g., against damage or wear. The through hole 8, the opening(s) 5, 24 and/or the insert 9 may also function as a mechanical guiding means for particular components, like functional components 6, to be inserted therein. Examples of such functional components 6 are described in further detail in the following.

The luminaire 1 may thus further comprise a functional component 6 which is preferably detachably mounted; here to the housing 4 or the electronic module 7. Preferably, the functional component 6 at least comprises a functional section 60 which can at least partially be inserted into the opening(s) 5, 24 or through hole 8, more preferred from a rear side R of the luminaire 1 towards a front side F of the luminaire 1, and most preferably in a way to be substantially flush with the front side F of the luminaire 1 or one of the surfaces (here the front surface 21) of the light guide panel 2.

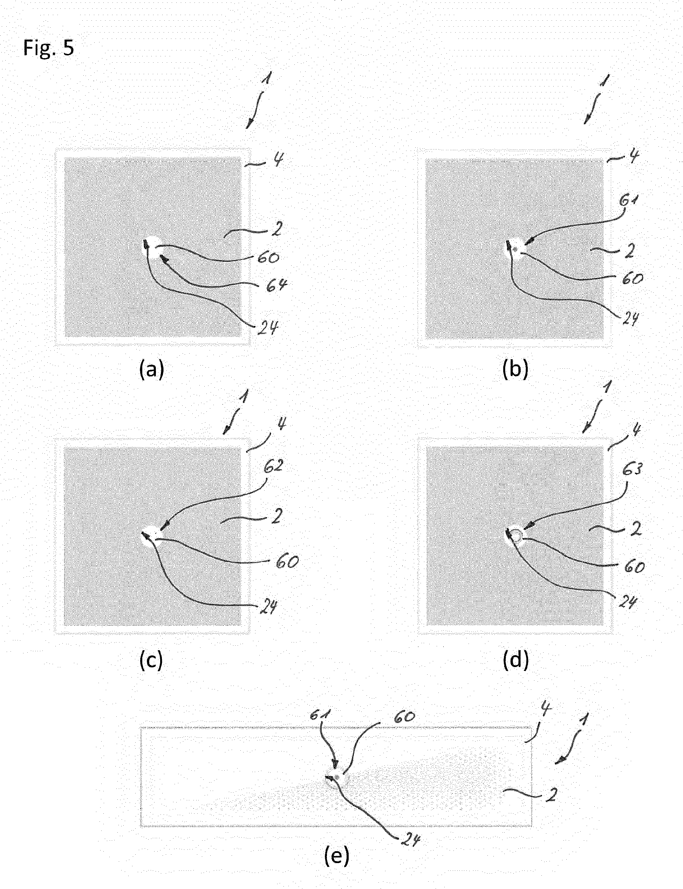

The functional section 60 may comprise one or a plurality of functional elements 61-64 of the group consisting of a sensor, like a passive infrared sensor (PIR sensor) 61 (see Figures 5b and 5e) and/or a microwave sensor (MWS) 62 (see Figure 5c), a lighting unit 63 (see Figure 5d), like an emergency light and/or a status indicator lamp, a wireless communication module, like a Bluetooth-module and/or a WLAN-module and/or an RFID-module, and a blank cover 64 (see Figure 5a). It is thus possible to equip the luminaire 1 with any desired additional function via the corresponding functional component 6. In case the functional component has, as shown, a similar or even identical layout, interchangeability of corresponding functional components 6 can be easily done throughout the whole lifecycle of the luminaire 1 in any easy manner.

The functional component 6 may further comprise a base section 65, which can preferably be detachably connected to the functional section 60. The base section 65 can comprise electronic components to run the functional section 60 and preferably its corresponding functional element(s) 61-64. The functional component 6 may be attached from a rear side R of the luminaire 1 preferably in a detachable manner and more preferably to the electronic module 7. The functional component 6 can be electrically and/or mechanically connected to the electronic module 7. Mechanical connection can be obtained by corresponding connection features MC of housings 66, 76 of the functional component 6 on the one side and the electronic module 7 on the other side. Additional or separate fixing means, like screws, can also be provided. Electric connection can be obtained simply by cable connection or by a kind of socket-and-plug connection 77, the latter preferably by simple attachment of the functional component 6 to the luminaire 1. The electronic module 7 may comprise a cable connection section 70 for connecting electrical cables to provide electricity or data signals for operating the luminaire 1. The cable connection section 70 may therefore comprises one or a plurality of the terminals 71 for receiving and connecting corresponding cables. The cable connection section 70 preferably further comprises a cover section 72 for selectively opening and closing the cable connection section 70, e.g., to cover the terminals 71.

The luminaire 1 can be a panel light, as shown in the embodiments. The luminaire 1 can be directly attached to mounting surface, like a wall or a ceiling. Therefore, the housing 4 or its base portion 40 may comprise mounting sections 42 for mounting the panel light 1 directly to a mounting surface, like a wall or a ceiling. The mounting sections 42 may also be used for receiving a hanger assembly for a pendant luminaire 1.

The present invention is not limited to the embodiments described herein above as long as being covered by the appended claims. The features of the embodiments can be replaced and combined in any desired manner.

## Claims

1. Light guide panel (2) substantially extending in a plane and having two opposing surfaces (21, 22) being connected by a circumferential side edge (20), wherein at least a section of the side edge (20) is configured to function as a light input area (23) for inputting light into the light guide panel (2), wherein an opening (24) extending between the two surfaces (21, 22) penetrates the light guide panel (2) to connect the two surfaces (21, 22), wherein an area (X) of the light guide panel (2) opposite to the light input area (23) with respect to the opening (24) comprises a reflective portion (25) configured to reflect light input into the light guide panel (2) via the light input area (23) towards a side (S) of the opening (24) opposite to the light input area (23).

2. Light guide panel (2) according to claim 1, wherein the reflective portion (25) is provided by a section of the side edge (20) being opposite to the light input area (23) with respect to the opening (24).

3. Light guide panel (2) according to any one of the preceding claims, wherein the reflective portion (25) is provided in a section of the light guide panel area (X) between the side edge (20) and the opening (24).

4. Light guide panel (2) according to claim 3, wherein the reflective portion (25) comprises a second opening, preferably a through-hole, extending between the two sides (21, 22), and more preferred being a longitudinal opening, slit or groove.

5. Light guide panel (2) according to any one of the preceding claims, wherein the reflective portion (25) is a reflective profiled section, preferably of the side edge (20) and/or in the light guide panel area (X) between the side edge (20) and the opening (24).

6. Light guide panel (2) according to any one of the preceding claims, wherein the reflective portion (25), preferably the reflective profiled section, comprises an angled section being angled with respect to the light input area (23) towards the opening (24), wherein the reflective portion (25) preferably has a scallop shape, a wave shape, a zig-zag shape, a U-shape, a V-shape, or a W-shape.

7. Light guide panel (2) according to any one of the preceding claims, wherein the reflective portion (25) comprises a reflective feature, like a reflective coating and/or a reflector element like a reflective strip.

8. Luminaire (1) comprising:
a light guide panel (2) according to any one of the preceding claims, and
a light source (3) provided to input light into the light guide panel (2) via the light input area (23).

9. Luminaire (1) according to claim 8, wherein the light source (3) comprises an LED module.

10. Luminaire (1) according to claim 8 or 9, further comprising at least one optical element (4), like a lens, a diffusor, a reflector and/or a luminaire cover, wherein the optical element (4) preferably has a panel-shape and being stacked with the light guide panel (2).

11. Luminaire (1) according to claim 10, wherein the optical element (4) has a further opening (5) being coaxially arranged with the opening (24) of the light guide panel (2) to form a through hole (8).

12. Luminaire (1) according to any one of claims 8 to 11, further comprising a housing (9) for carrying the light guide panel (2) and/or the light source (3), and preferably also carrying the optical element(s) (4).

13. Luminaire (1) according to any one of claims 8 to 12, further comprising a functional component (6) preferably being detachably mounted, the functional component (6) comprising a functional section (60) at least partially being inserted in the opening preferably from a rear side (R) towards a front side (F), more preferably in a way to be substantially flush with the front side (F) of the luminaire (1) or one of the surfaces (21) of the light guide panel (2).

14. Luminaire (1) according to claim 13, wherein the functional section (60) comprises one or a plurality of functional elements (61-64) of the group consisting of: a sensor, like a passive infrared sensor (PIR sensor) (61) and/or an microwave sensor (MWS) (62), a lighting unit (63), like an emergency light and/or a status indicator lamp, a wireless communication module, like a Bluetooth module and/or a WLAN module and/or an RFID module, and a blank cover (64).

15. Luminaire (1) according to any one of claims 8 to 14, wherein the luminaire (1) is a panel light.
